# FASCICULE DE BREVET EUROPEEN

(11) **EP 0 701 057 B1**
(45) Date de publication et mention de la délivrance du brevet: **04.11.1998**
(21) Numéro de dépôt: 95402028.5
(22) Date de dépôt: 07.09.1995
(51) Int. Cl.: F02M 35/10, F02D 9/10, F02B 27/02, F01L 1/44

(54) **Tubulure d'admission d'air à volets pivotants pour moteur à combustion interne**
Ansaugrohr mit Schwenkklappen für eine Brennkraftmaschine
Intake manifold with pivotable flaps for internal combustion engine

(30) Priorité: 09.09.1994 FR 9410799
(43) Date de publication de la demande: 13.03.1996
(73) Titulaire: MAGNETI MARELLI FRANCE, 92002 Nanterre Cédex (FR)
(72) Inventeur: Semence, Pierre, F-78400 Chatou (FR); Pajard, Claude, F-95240 Cormeilles-en-Parisis (FR)
(74) Mandataire: Bérogin, Francis

(56) Documents cités:
- WO-A-94/05901
- GB-A- 2 063 362
- NL-C- 60 523
- US-A- 4 240 387
- REVUE AUTOMOBILE SUISSE, vol.87, no.22, 28 Mai 1992, BERNE,CH pages 17 - 19, XP000255206 OLAF VON FERSEN 'Le moteur modulaire de Volvo'

## Description

L'invention concerne une tubulure d'admission d'air pour moteur à combustion interne, du type comprenant, pour chaque chambre de combustion du moteur, au moins deux conduits d'amenée d'air dont au moins un est sélectivement fermé, notamment aux faibles charges du moteur, par un organe d'étranglement commandé,comme connu par GB-A-2 063 362.

L'invention concerne plus particulièrement une telle tubulure d'admission d'air utilisable comme dispositif de commande d'admission d'air pour un moteur à combustion interne, notamment pour véhicule automobile, du type dit multisoupape et de préférence également multicylindre, c'est-à-dire comprenant plusieurs soupapes d'admission par cylindre ou par chambre de combustion, et plusieurs cylindres ou chambres de combustion.

Il est connu de commander l'admission de l'air dans un moteur multicylindre par un organe piloté assurant un étranglement progressif d'une veine d'air, par exemple par un organe d'étranglement en forme de disque, appelé papillon, et monté pivotant dans un conduit d'un corps de papillon, cet organe d'étranglement étant unique et commun à tous les cylindres du moteur, et disposé en amont d'une tubulure d'admission d'air comprenant un plenum, ou partie commune à tous les cylindres, prolongé par des conduits d'amenée d'air, conduisant chacun l'air d'alimentation vers une soupape d'admission respectivement associée, chaque conduit d'amenée débouchant par son orifice de sortie, à son extrémité aval, à proximité immédiate en amont de la soupape d'admission associée, dans un moteur équipé d'une installation d'alimentation en carburant par injection, du type monopoint ou multipoint.

Dans certains moteurs multisoupape, munis d'une seconde soupape d'admission par cylindre ou chambre de combustion, il est également connu de commander l'admission de l'air vers la seconde soupape, à partir d'une certaine charge du moteur, au moyen d'une tubulure d'admission d'air comportant, pour chaque cylindre ou chambre de combustion, un second conduit d'amenée d'air, raccordé vers l'amont au plenum et débouchant vers l'aval en regard de la seconde soupape, et tel que le débit d'air qui le traverse soit commandé, généralement en tout ou rien, par un second organe d'étranglement commandé correspondant.

Comme second organe d'étranglement, il est connu d'utiliser un papillon monté dans son corps ou une électrovanne pour chaque second conduit d'amenée d'air, c'est-à-dire pour chaque cylindre ou chambre de combustion.

Ces réalisations connues ne donnent pas entièrement satisfaction en raison de leur encombrement et de leur coût.

De plus, elles présentent l'inconvénient qu'un volume important subsiste dans le conduit d'amenée d'air correspondant, en aval du second organe d'étranglement, et reste en communication permanente avec la pré-chambre de la seconde soupape, -de sorte que ce volume important est susceptible de perturber le comportement acoustique de la tubulure d'admission.

Par ailleurs, on connaît par US-A-4 240 387 un système d'admission de mélange air/carburant comprenant, pour chaque cylindre d'un moteur alimenté par au moins un carburateur, un conduit d'amenée de mélange sélectivement fermé, en aval du carburateur, par un organe d'étranglement commandé comprenant un volet, monté pivotant autour d'un axe sensiblement transversal au conduit devant être sélectivement fermé, et qui est escamoté dans sa position d'ouverture du conduit, par la manoeuvre d'un organe d'entraînement, dans un logement ménagé dans la paroi dudit conduit.

L'invention a pour but de remédier aux inconvénients précités, et de proposer une tubulure d'admission d'air pour moteur à combustion interne, en particulier à au moins deux soupapes d'admission par cylindre ou chambre de combustion, et de préférence également à plusieurs cylindres ou chambres de combustion, et comprenant, pour chaque chambre de combustion ou cylindre, au moins deux conduits d'amenée d'air, dont l'un au moins est sélectivement fermé au moyen d'un organe d'étranglement simple, efficace et d'encombrement réduit.

L'invention a également pour but de proposer une telle tubulure d'admission d'air destinée en particulier aux moteurs multicylindre, et équipée d'organes d'étranglement tels que plusieurs d'entre eux, et de préférence tous, peuvent être actionnés par un organe de commande commun.

A cet effet, l'invention propose une tubulure d'admission d'air, du type présenté ci-dessus, qui se caractérise en ce que l'organe d'étranglement comprend un volet monté pivotant autour d'un axe sensiblement transversal audit conduit sélectivement fermé, et pivoté de l'une à l'autre de deux positions, dont l'une est une position d'obturation au moins partielle dudit conduit, et l'autre une position d'ouverture dudit conduit, dans laquelle le volet est escamoté, par la manoeuvre d'un organe d'entraînement, dans un logement ménagé latéralement dans la paroi dudit conduit, le volet étant conformé en godet creux vers le logement et comportant un voile d'obturation dudit conduit d'amenée sélectivement fermé, et dont la forme est telle qu'en position escamotée du volet, le voile d'obturation, qui forme la partie amont du godet, épouse la forme de la paroi du conduit et la prolonge au niveau du logement en assurant sensiblement sa continuité pour fermer le logement dans cette position.

En effet, la perte de charge dans le conduit d'amenée est alors très réduite en position d'ouverture maximale de ce conduit, en raison de la forme du voile d'obturation, qui suit et prolonge la paroi du conduit. De plus, le couple résistant, s'opposant à la manoeuvre du volet, est réduit en raison de l'absence de contre-pression du côté de l'intérieur du godet, car le volet est commandé pour passer en position escamotée, et ouvrir le conduit d'amenée d'air correspondant, en phase de dépression à l'extrémité aval de ce conduit.

Avantageusement de plus, ledit godet est fermé vers l'aval par un voile de fond à surface courbe, isolant le logement de la partie d'extrémité aval du conduit, lorsque le volet est en position d'obturation. De préférence, pour réduire le volume de cette partie d'extrémité aval du conduit, la surface courbe du voile de fond est sensiblement un tronc de cylindre centré sur l'axe de pivot du volet. En effet, la présence du voile de fond réduit le volume de la partie aval du conduit qui reste en communication avec la soupape correspondante de la chambre de combustion, et limite fortement les risques de remontée de gaz imbrûlés depuis cette chambre de combustion vers l'amont de ce conduit et le plenum auquel il se raccorde, en cas de chevauchement des phases d'ouverture des soupapes d'admission et d'échappement de la chambre de combustion correspondante.

En outre, le godet comprend avantageusement deux parois latérales raccordant le voile de fond aval au voile d'obturation amont, et chacune à faible distance de la paroi latérale dudit conduit sélectivement fermé, en position d'obturation de ce dernier par le volet, ces parois latérales améliorant la rigidité du godet et contribuant également à la réduction de la remontée éventuelle de gaz d'échappement ou de gaz imbrûlés, en raison de la relative grande longueur de ces parois latérales, dans la direction du flux d'air circulant dans le conduit correspondant, et de la faible distance qui sépare ces parois de la paroi latérale du conduit.

Afin de réduire encore le volume de la partie aval du conduit restant en communication avec la soupape d'admission correspondante, et afin de perturber au minimum le comportement acoustique de la tubulure d'admission, le logement est ménagé à proximité d'un orifice de sortie, à l'extrémité aval dudit conduit d'amenée sélectivement fermé.

Pour réduire encore la perte de charge dans le conduit, en position d'ouverture maximum de ce dernier, il est de plus avantageux que le volet soit monté pivotant autour de son axe de pivot par sa partie d'extrémité amont retenue dans le logement correspondant par un arbre traversant ladite partie d'extrémité amont et rotatif autour de l'axe de pivot du volet.

Avantageusement, pour assurer simultanément le montage pivotant du volet, son entraînement en rotation et sa retenue dans le logement correspondant, le volet est monté pivotant autour de son axe de pivot par un canon de tourillonnement, percé d'une lumière axiale dont la section présente une forme adaptée à celle de la section d'un arbre d'entraînement qui la traverse avec une liberté axiale, de sorte que la rotation de l'arbre autour de l'axe de pivot assure l'entraînement positif en rotation du canon et du volet, et que la liberté axiale entre l'arbre et le volet permette au volet de se centrer dans ledit conduit.

Dans un mode de réalisation d'une structure simple et d'un fonctionnement fiable, le canon du volet comprend deux tourillons coaxiaux de retenue dans le logement, dans lequel l'arbre est monté pivotant à l'aide de deux bagues de guidage, disposées axialement de part et d'autre du canon, et renfermant chacune au moins un joint d'étanchéité compressible, pouvant limiter le jeu axial et/ou radial du volet sur l'arbre d'entraînement, qui traverse les tourillons du canon, les bagues et joints d'étanchéité. De plus, pour limiter davantage le jeu radial de l'arbre d'entraînement, les bagues de guidage peuvent présenter avantageusement des moyens souples venus de moulage sur leur face interne.

Pour faciliter le montage de chaque volet pivotant dans la tubulure, il est de plus avantageux que le logement correspondant soit en partie formé par un évasement dans la paroi dudit conduit d'amenée et fermé par un capot rapporté sur ledit conduit d'amenée et donnant au logement une forme circonscrite à celle du volet en position d'escamotage dans le logement. Dans ce cas, les bagues de guidage et les tourillons du canon sont avantageusement logés dans des berceaux ménagés d'une part dans la paroi du conduit correspondant et d'autre part dans le capot de fermeture du logement.

Lorsque le moteur est à plusieurs chambres de combustion, il est en outre avantageux que les volets pivotants d'au moins deux conduits d'amenée sélectivement fermés, et de préférence de tous ces conduits, soient manoeuvrés simultanément par un arbre commun d'entraînement en rotation, commandé par un actionneur.

Dans une première variante, l'arbre d'entraînement peut être rigide, par exemple métallique, de section non de révolution, et de préférence constante, et par exemple carrée.

Mais, selon une autre variante, l'arbre commun d'entraînement peut être flexible et comprendre une âme sur laquelle sont fixés axialement espacés des segments d'arbre d'entraînement ayant chacun une longueur adaptée à la dimension axiale d'un volet correspondant à entraîner et une section complémentaire, avec un jeu radial adapté, de celle de la lumière du volet que le segment traverse axialement pour assurer son entraînement en rotation, de sorte que cet arbre puisse avantageusement compenser les éventuels désaxages entre les volets.

Dans ce dernier cas, et selon une réalisation simplifiée de l'arbre flexible d'entraînement, chaque segment d'arbre est surmoulé sur l'âme de l'arbre, cette âme pouvant être flexible et de préférence métallique, en particulier du type constitué de multibrins métalliques torsadés.

Dans une forme avantageuse de réalisation, facilitant son montage entre le moteur et un organe principal de commande d'alimentation en air, tel qu'un corps de papillon, la tubulure comprend, en amont, un plenum commun à toutes les chambres de combustion du moteur, et alimenté en air par un orifice d'entrée, par exemple dans une face amont de la tubulure, et, transversalement au plenum et en dérivation vers l'aval à partir de cet dernier, deux conduits d'amenée d'air pour chaque chambre de combustion, lesdits conduits d'amenée étant sensiblement parallèles et côte-à-côte, et tels que l'un est sélectivement fermé par un volet pivotant et l'autre en permanence ouvert, les deux conduits s'étendant jusqu'à une bride de fixation au moteur, dans laquelle chacun des conduits débouche par son orifice de sortie à son extrémité aval.

De plus, pour limiter le coût et le poids d'une telle tubulure, il est avantageux qu'elle soit essentiellement réalisée par un assemblage de pièces en un matériau de synthèse moulable, de préférence en thermoplastique.

D'autres avantages et caractéristiques de l'invention découleront de la description donnée ci-dessous, à titre non limitatif, d'exemples de réalisation décrits en référence aux dessins annexés sur lesquels :
- la figure 1 est une vue en perspective cavalière d'une tubulure d'admission d'air pour un moteur à quatre cylindres en ligne et à deux soupapes d'admission par cylindre,
- la figure 2 est une vue en coupe transversale de la tubulure de la figure 1, par l'axe d'un conduit d'amenée d'air équipé d'un volet pivotant,
- la figure 3 est une vue en coupe partielle par un plan passant par l'axe de pivot d'un volet et sensiblement perpendiculaire à l'axe du conduit d'amenée d'air correspondant,
- la figure 4 est une vue en coupe partielle de la tubulure par un plan passant par l'axe de pivot d'un volet et sensiblement parallèle à l'axe du conduit correspondant,
- la figure 5 est une vue en perspective cavalière de la tubulure des figures 1 à 4, sur laquelle un volet pivotant est représenté en vue éclatée faisant apparaître sa constitution interne,
- la figure 6 est une vue analogue à la figure 5 pour un second exemple de tubulure muni d'un autre type d'arbre d'entraînement commun des volets pivotants, et
- les figures 7 et 8 sont des vues sensiblement analogues aux figures 3 et 4 pour l'exemple de tubulure de la figure 6.

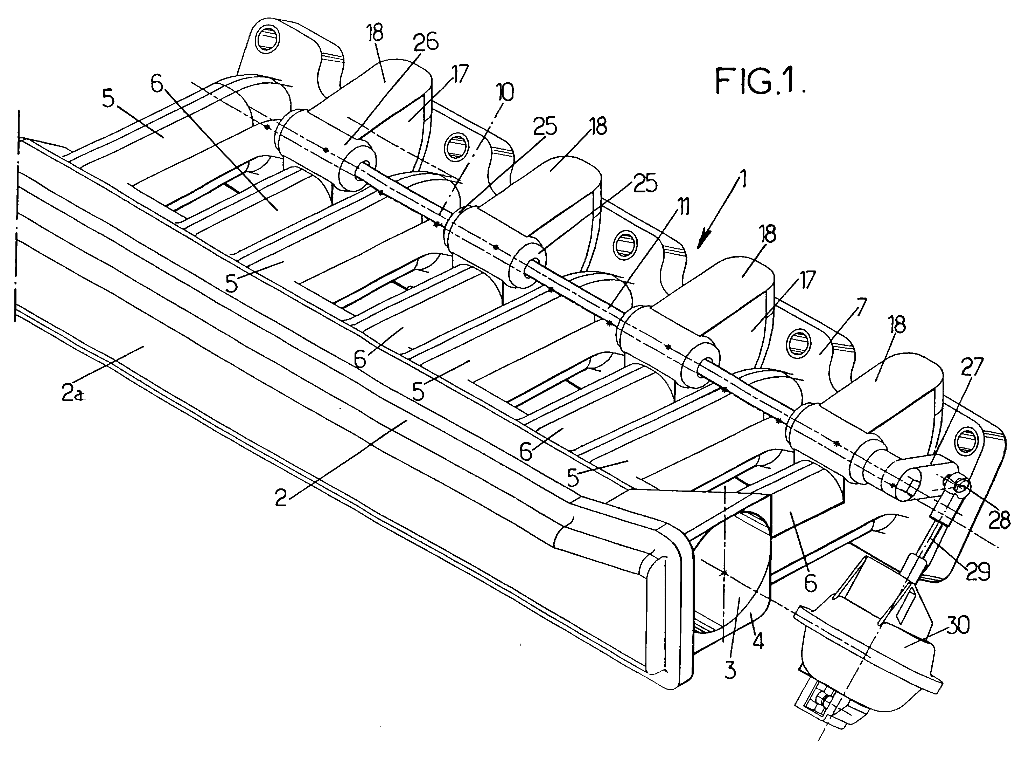

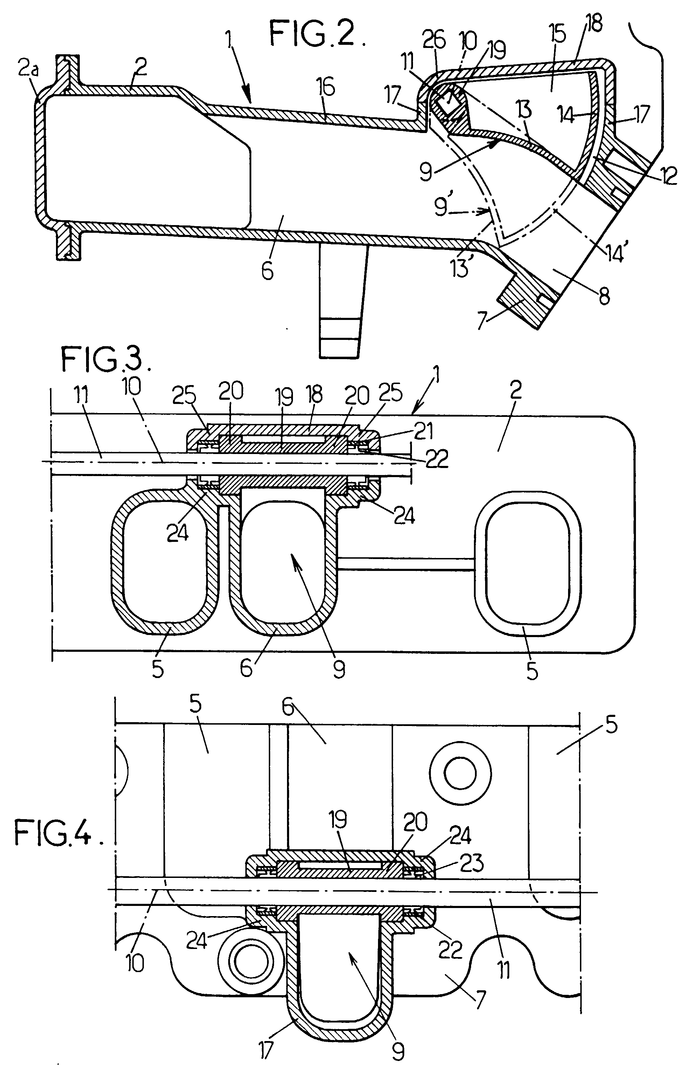

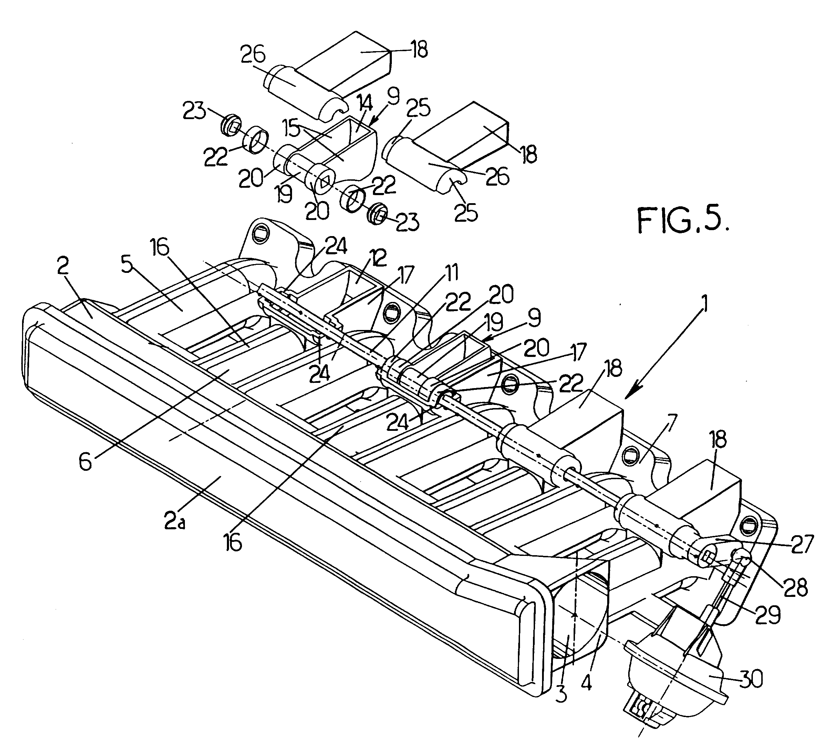

La tubulure d'admission d'air 1 des figures 1 à 5 comprend un plenum 2 d'amont, rectiligne et allongé, de section transversale par exemple polygonale, visible sur la figure 2, et commun aux quatre chambres de combustion du moteur, dont chacune est, de manière classique, délimitée par un cylindre correspondant du moteur et une culasse montée sur le bloc moteur. Ce plenum 2 est alimenté en air par un orifice d'entrée d'air 3, ménagé dans la face amont 4 de la tubulure 1, l'air provenant d'un dispositif principal de commande d'admission d'air au moteur (non représenté), tel qu'un corps de papillon, monté en amont de l'entrée d'air 3.

La tubulure 1 comprend également huit conduits tubulaires d'amenée d'air, sensiblement parallèles et côte-à-côte, groupés en quatre paires de deux conduits 5 et 6 différents l'un de l'autre pour chaque paire assurant l'alimentation de l'une respectivement des quatre chambres de combustion.

Les conduits 5 et 6 s'étendent transversalement au plenum 2, dans lequel chaque conduit 5 ou 6 s'ouvre par son extrémité amont, et en dérivation du plenum 2 vers l'aval, jusqu'à une bride 7 de fixation de la tubulure 1 sur le moteur, et dans laquelle chaque conduit 5 ou 6 débouche à son extrémité aval par un orifice de sortie 8, dirigé en regard de l'une respectivement des deux soupapes d'admission correspondantes de la chambre de combustion associée à chaque paire de conduits 5 et 6.

Les quatre conduits 5 sont identiques l'un à l'autre, en permanence ouverts et ont une section transversale qui, dans cet exemple, est sensiblement constante et en forme de rectangle à sommets arrondis (voir figures 3 et 4) et chaque conduit 5 est légèrement coudé dans sa partie aval de jonction à la bride 7, mais pourrait être rectiligne sur toute sa longueur, selon la position de la première soupape d'admission du cylindre associé, en regard de laquelle son orifice de sortie 8 (figure 2) doit déboucher dans la bride 7.

Les quatre conduits 6 sont également identiques l'un à l'autre, en ayant la même section transversale que les conduits 5 (voir figure 3) et en étant par exemple également légèrement coudés dans leur partie aval de raccordement à la bride 7, mais pourraient également être rectilignes sur toute leur longueur. Toutefois, les conduits 6 sont un peu plus longs que les conduits 5 dans cet exemple (voir figure 4) en raison de la position des secondes soupapes d'admission des cylindres associés, en regard desquelles les orifices de sortie 8 des conduits 6 doivent déboucher dans la bride 7.

Mais la différence essentielle entre les conduits 5 et 6 est que les conduits 6 peuvent être sélectivement fermés chacun par un organe d'étranglement commandé et associé, décrit à présent en référence aux figures 2 à 5.

Chaque organe d'étranglement est un volet 9, monté pivotant autour d'un axe de pivot géométrique 10 qui est perpendiculaire au plan moyen du conduit 6 (dans lequel est contenu l'axe de ce conduit 6) et donc sensiblement parallèle à l'axe du plenum 2, et le volet 9 est pivoté par la rotation d'un arbre d'entraînement 11 monté rotatif coaxialement autour de l'axe de pivot 10, entre deux positions limites dont l'une est une position d'obturation au moins partielle du conduit 6 par le volet 9, comme représenté en 9' en traits interrompus sur la figure 2, et l'autre une position d'ouverture totale du conduit 6, dans laquelle le volet 9 est escamoté dans un logement latéral 12 s'ouvrant dans la paroi du conduit 6.

Le volet 9 a la forme d'un godet creux vers le logement 12 et fermé vers l'amont par un voile d'obturation 13, vers l'aval par un voile de fond 14, et sur les côtés par deux parois latérales 15, sensiblement parallèles l'une à l'autre, raccordant les voiles 13 et 14 pour rigidifier le godet, et chacune à faible distance de la paroi latérale correspondante du conduit 6, lorsque le volet 9 est basculé en position d'obturation de ce conduit 6. Chaque paroi latérale 15, sensiblement perpendiculaire à l'axe de pivot 10, a une forme sensiblement triangulaire à deux côtés arrondis, car le voile de fond 14 présente la forme d'un secteur cylindrique centré sur l'axe de pivot 10, et se raccorde directement par son bord inférieur au bord inférieur et aval du voile d'obturation amont 13, lequel présente une forme incurvée, qui épouse et prolonge la forme de la paroi supérieure 16 du conduit 6 au niveau du logement 12, lorsque le volet 9 est basculé en position d'ouverture du conduit 6. Le logement 12 s'ouvre dans la paroi supérieure 16 de la partie aval coudée du conduit 6, à proximité de sa sortie 8 à l'extrémité aval, de sorte qu'en position escamotée du volet 9, la forme incurvée du voile amont 13 assure sensiblement la continuité de cette paroi 16 de manière à fermer sensiblement le logement 12 dans cette position. Ceci permet de réduire fortement les pertes de charge dans le conduit 6 en position d'ouverture du volet 9.

En position de fermeture du conduit 6 par le volet 9 (comme représenté en 9' sur la figure 2), le voile amont 13 dans la position 13' (figure 2) assure l'obturation du conduit 6 vis-à-vis du flux d'air provenant du plenum 2, tandis que le voile de fond 14 dans la position 14' non seulement isole le logement 12 du volume restant en communication avec la soupape correspondante à l'extrémité aval du conduit 6 et réduit ce volume, par sa présence, sa forme courbe et la disposition du logement 12 à proximité de l'extrémité aval 8 de ce conduit 6, mais également s'oppose aux remontées de gaz d'échappement et imbrûlés de la chambre de combustion correspondante vers le plenum 2 par le conduit 6, en cas de chevauchement des phases d'ouverture des soupapes d'admission et d'échappement du cylindre correspondant, ces remontées de gaz étant également réduites par les parois latérales 15 du godet, en raison de leur extension selon l'axe du conduit 6 et de la faible distance qui les sépare des parois latérales de ce conduit 6.

Le logement 12 est délimité par un évasement 17 de la paroi supérieure 16 du conduit 6 qui entoure l'ouverture du logement 12 dans ce dernier, ainsi que par un capot 18 rapporté sur cet évasement 17 pour fermer le logement 12 à sa partie supérieure, et lui donner une forme qui enveloppe le volet 9 en position escamotée (voir la position en traits pleins sur la figure 2).

Le volet 9 est entraîné en rotation par l'arbre 11 autour de son axe de pivot 10 par un canon de tourillonnement 19, prévu à son extrémité amont et auquel le voile amont 13 et les parois latérales 15 du godet se rattachent. Ce canon 19, en forme de cylindre présentant, à ses extrémités axiales, des tourillons cylindriques coaxiaux 20, est percé axialement d'une lumière 21, de section transversale carrée complémentaire de la section carrée de l'arbre d'entraînement 11, qui est rigide, par exemple métallique, et de section constante sur toute sa longueur, et qui traverse la lumière 21 de sorte que le canon 19 peut se positionner librement dans le sens axial sur l'arbre 11. Ainsi, la rotation de l'arbre de section carrée 11 autour de son axe de pivot 10 assure l'entraînement positif en rotation du canon 19 et donc du volet 9, le montage coulissant du canon 19 sur l'arbre 11 permettant un jeu axial entre l'arbre 11 et le volet 9, de sorte que le volet 9 peut se centrer dans le conduit 6 en position d'obturation. Simultanément, les tourillons 20 du canon 19 et l'arbre 11 traversant ce dernier assurent la retenue du volet 9, par sa partie d'extrémité amont, dans le logement 12 correspondant.

Le guidage et le positionnement de l'arbre 11 et du canon 19 sont également assurés à l'aide de deux bagues 22 cylindriques et métalliques, disposées coaxialement de part et d'autre des tourillons 20 du canon 19, et entourant chacune un joint d'étanchéité annulaire à lèvres 23, qui peut être comprimé radialement et/ou axialement pour limiter le jeu radial et/ou axial du canon 19 sur l'arbre 11, ce dernier traversant le canon 19 et ses tourillons 20 ainsi que les bagues 22 et joints 23.

Afin de limiter encore le jeu radial de l'arbre 11, les bagues 22 peuvent éventuellement contenir d'autres moyens souples ou élastiquement déformables (non représentés) venus de moulage sur leur face interne.

Les bagues 22 et les tourillons 20 sont reçus dans des berceaux hémicylindriques de forme complémentaire 24 et 25 formés respectivement dans l'évasement 17 de la paroi 16 du conduit 6 et aux extrémités axiales d'un embout en secteur cylindrique 26 à l'extrémité amont du capot 18.

Le montage s'effectue de la manière suivante : chaque volet 9 est mis en place dans le logement 12 ouvert correspondant et les tourillons 20 de son canon 19 sont disposés dans les berceaux 24, qui reçoivent également les deux bagues 22 contenant les joints 23. Les berceaux 24 sur l'évasement 17 de la paroi 16 viennent de moulage avec le corps de la tubulure 1 constituant, en une seule pièce moulée en une matière synthétique telle qu'un thermoplastique, la bride 7, les huit conduits 5 et 6 ainsi que la majeure partie du plenum 2, fermé du côté opposé à la bride 7 par un capot latéral 2a moulé dans le même matériau et solidarisé au corps de tubulure par soudure aux ultrasons ou encliquetage par exemple. L'arbre 11, en métal pour être suffisamment solide, et qui entraîne simultanément les volets 9 de tous les conduits 6, est ensuite monté en lui faisant traverser successivement les quatre ensembles de joints 23, bagues 22 et canon 19 et tourillons 20. Puis des capots 18, également moulés en thermoplastique, comme d'ailleurs les volets 9, sont fixés sur les parties évasées 17 du corps de tubulure par soudure aux ultrasons ou par encliquetage, par exemple.

La réalisation du corps de tubulure 1, du capot latéral 2a, des volets 9 et capots 18 en pièces moulées en thermoplastique permet de limiter le coût et le poids de la tubulure. Bien que l'arbre commun 11 soit en métal, il n'en résulte aucune incompatibilité avec les pièces moulées en thermoplastique, car la possibilité de coulissement axial de l'arbre 11 dans les volets 9 offerte par le montage de l'invention permet d'éviter les coincements qui pourraient être provoqués par des dilatations différentielles d'origine thermique entre ces différents matériaux.

L'arbre commun 11, permettant d'entraîner simultanément en rotation tous les volets 9, peut être muni, à proximité d'une extrémité axiale, d'une gorge (non représentée) dans laquelle vient s'encliqueter une nervure de forme complémentaire dans un palier (également non représenté) du corps de tubulure 1, dans lequel est engagée cette extrémité de l'arbre 11, afin de le retenir axialement. L'autre extrémité de l'arbre 11 est solidaire en rotation, autour de l'axe de pivot 6, d'une biellette 27 sur laquelle s'articule en 28 l'extrémité de l'arbre de sortie 29 d'un actionneur 30, commande ainsi la rotation de l'arbre 11 et est lui-même piloté par exemple par un calculateur d'injection de carburant (non représenté) sensible aux variations de charge du moteur. A titre d'exemple, l'actionneur 30, rapporté sur la bride 7 de la tubulure 1, peut être constitué par une vanne pneumatique, dont l'arbre de sortie 29 est translaté selon son axe longitudinal.

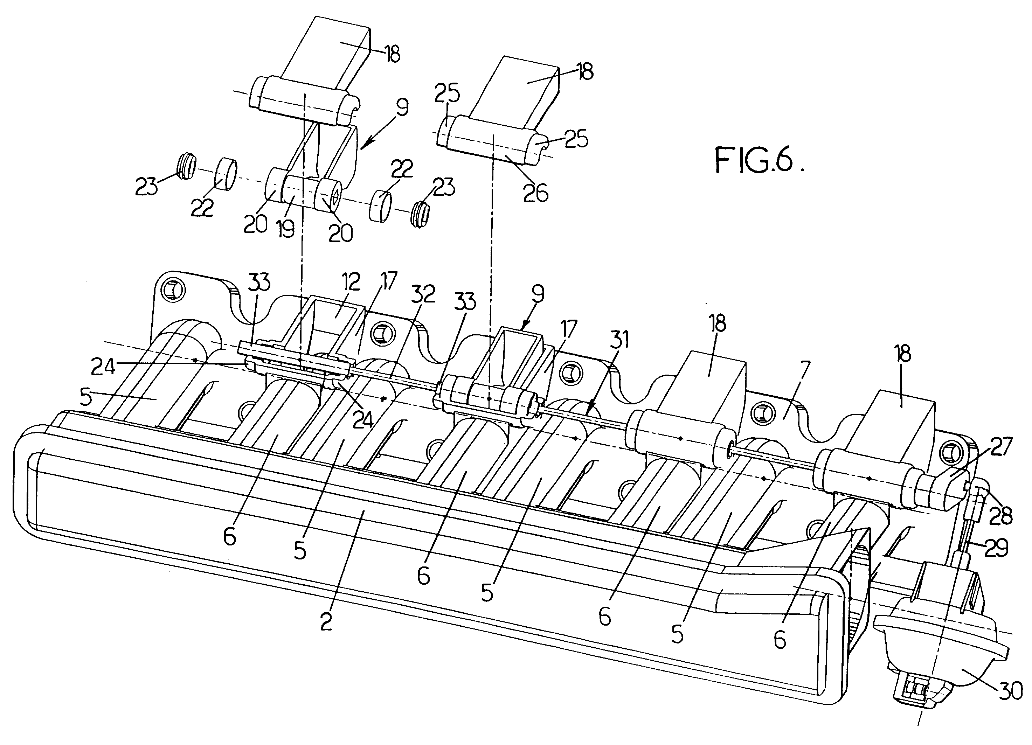

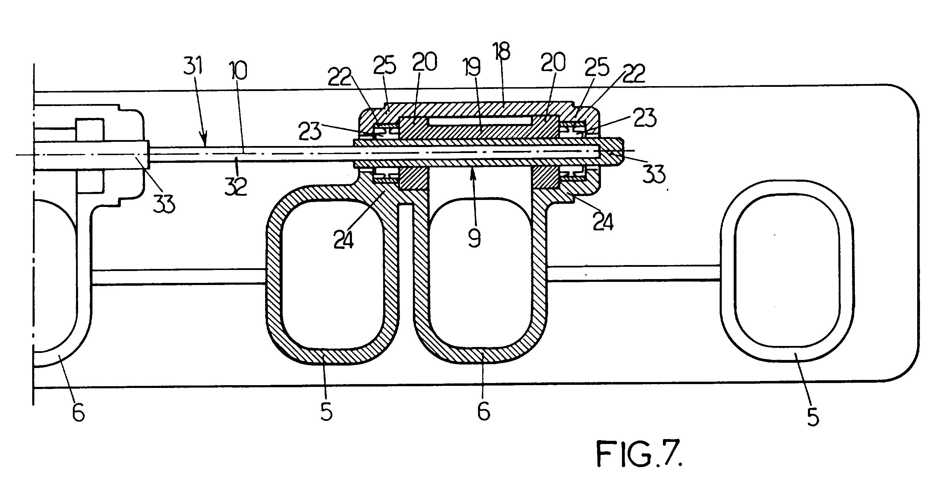

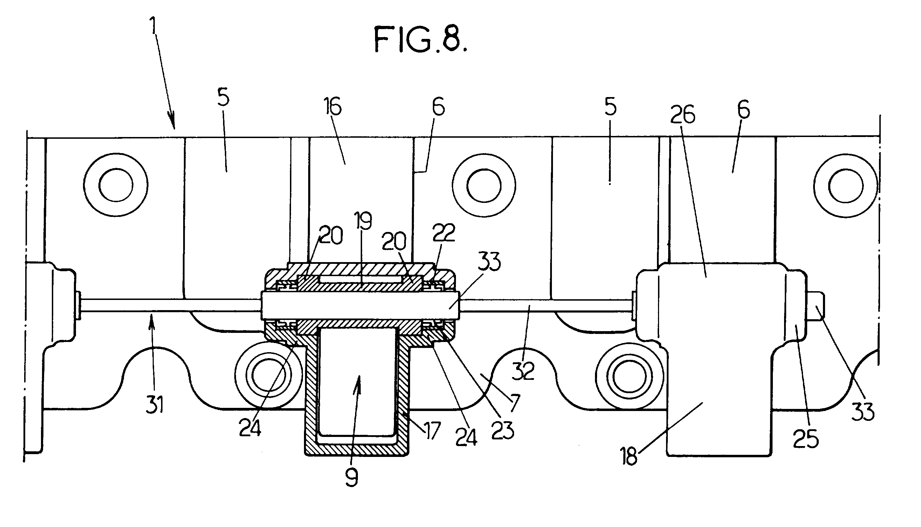

La variante de réalisation des figures 6, 7 et 8 ne se distingue essentiellement de celle des figures 1 à 5 que par la réalisation de l'arbre commun d'entraînement, de sorte que les mêmes références numériques sont utilisées pour désigner les éléments identiques des deux réalisations.

Dans la variante des figures 6 à 8, l'arbre commun 31 d'entraînement simultané en rotation de tous les volets 9 est flexible et constitué d'une âme centrale 32, sur laquelle sont fixés des segments d'arbre 33 d'entraînement, axialement espacés d'un pas adapté les uns des autres, et chacun d'une section transversale non de révolution, de préférence carrée, complémentaire de la section transversale de la lumière 21 des canons 19 des volets 9 avec cependant un jeu radial adapté, autorisant un coulissement axial relatif du segment et du volet correspondant. L'arbre flexible 31 a, par exemple, une âme 32 flexible, constituée de multibrins métalliques torsadés, donnant à l'arbre 31 une souplesse radiale ou en flexion mais une grande rigidité en torsion. Chaque segment d'entraînement 33, réalisé par surmoulage sur l'âme 32, est d'une longueur (selon l'axe de pivot 10) suffisante pour qu'il puisse traverser le canon 19 et les tourillons 20, les bagues 22 et joints 23 pour le volet 9 correspondant, ainsi que les bords des berceaux 24 et 25 correspondants. Un tel arbre 31, à la fois flexible par son âme 32 et à plusieurs segments d'entraînement 33, facilite le montage en permettant, grâce à sa flexibilité ou souplesse radiale, de compenser des désalignements plus importants que dans la variante précédente des berceaux 24 et 25 et des canons 19 formant les paliers et portées de rotation des différents volets 9, sans compromettre la simultanéité de l'entraînement en rotation des volets 9, grâce à sa grande rigidité en torsion.

Dans cette variante, pour arrêter l'arbre 31 en translation, il peut être prévu un cran d'indexation annulaire à proximité de l'extrémité opposée à l'actionneur 30 sur le segment d'entraînement 33 le plus éloigné de cet actionneur 30 sur l'arbre 31, ce cran d'indexation pouvant s'encliqueter sur une nervure annulaire dans un évidement du corps de tubulure 1 formant palier pour cette extrémité du dernier segment 33 de l'arbre 31.

Dans les deux réalisations décrites ci-dessus, on constate que le couple résistant, s'opposant à la manoeuvre des volets 9, est réduit, car aucune contre-pression ne se manifeste du côté de l'intérieur des godets, chaque volet 9 étant manoeuvré de la position d'obturation du conduit 6 vers la position d'ouverture de ce dernier en phase de dépression à l'extrémité aval de ce conduit 6.

## Revendications

1. Tubulure d'admission d'air pour moteur à combustion interne, en particulier à au moins deux soupapes d'admission par chambre de combustion du moteur, la tubulure (1) étant du type comprenant, pour chaque chambre de combustion, au moins deux conduits d'amenée d'air (5, 6) dont au moins un (6) est sélectivement et au moins partiellement fermé, notamment aux faibles charges du moteur, par un organe d'étranglement commandé, caractérisée en ce que ledit organe d'étranglement comprend un volet (9), monté pivotant autour d'un axe (10) sensiblement transversal audit conduit (6) sélectivement fermé, et pivoté de l'une à l'autre de deux positions, dont l'une est une position d'obturation au moins partielle dudit conduit (6), et l'autre une position d'ouverture dudit conduit (6), dans laquelle le volet (9) est escamoté, par la manoeuvre d'un organe d'entraînement (11), dans un logement (12) ménagé dans la paroi (16) dudit conduit (6), ledit volet (9) étant conformé en godet creux vers le logement (12) et comportant un voile (13) d'obturation dudit conduit (6) d'amenée sélectivement fermé, et dont la forme est telle qu'en position escamotée du volet (9), le voile d'obturation (13), qui forme la partie amont du godet, épouse la forme de la paroi (16) du conduit (6) et la prolonge au niveau du logement (12) en assurant sensiblement sa continuité pour fermer le logement (12) dans cette position.

2. Tubulure selon la revendication 1, caractérisée en ce que ledit godet est fermé vers l'aval par un voile de fond (14) à surface courbe, isolant le logement (12) de la partie d'extrémité aval du conduit (6) lorsque le volet (9) est en position d'obturation.

3. Tubulure selon la revendication 2, caractérisée en ce que ladite surface courbe du voile de fond est sensiblement un tronc de cylindre centré sur l'axe de pivot (10) du volet (9).

4. Tubulure selon l'une des revendications 2 et 3, caractérisée en ce que le godet comprend deux parois latérales (15) raccordant le voile de fond (14) aval au voile d'obturation (13) amont, et chacune à faible distance de la paroi latérale dudit conduit (6) sélectivement fermé, en position d'obturation de ce dernier par le volet (9).

5. Tubulure selon l'une quelconque des revendications 1 à 4, caractérisée en ce que ledit logement (12) est ménagé à proximité d'un orifice de sortie (8) à l'extrémité aval dudit conduit d'amenée (6) sélectivement fermé.

6. Tubulure selon l'une quelconque des revendications 1 à 5, caractérisée en ce que le volet (9) est monté pivotant autour de son axe de pivot (10) par sa partie d'extrémité amont (19) retenue dans le logement (12) correspondant par un arbre (11) traversant ladite partie d'extrémité amont (19) et rotatif autour de l'axe de pivot (10) du volet (9).

7. Tubulure selon l'une quelconque des revendications 1 à 6, caractérisée en ce que le volet (9) est monté pivotant autour de son axe de pivot (10) par un canon de tourillonnement (19), percé d'une lumière axiale (21) dont la section présente une forme adaptée à celle de la section d'un arbre d'entraînement (11) qui la traverse avec une liberté axiale, de sorte que la rotation de l'arbre (11) autour de l'axe de pivot (10) assure l'entraînement positif en rotation du canon (19) et du volet (9), et que la liberté axiale entre l'arbre (11) et le volet (9) permette au volet (9) de se centrer dans ledit conduit (6).

8. Tubulure selon la revendication 7, caractérisée en ce que le canon (19) du volet (9) comprend deux tourillons (20) coaxiaux de retenue dans le logement (12), dans lequel l'arbre (21) est monté pivotant à l'aide de deux bagues de guidage (22), disposées axialement de part et d'autre du canon (19), et renfermant chacune au moins un joint d'étanchéité (23) compressible, pouvant limiter le jeu axial et/ou radial du volet (9) sur l'arbre d'entraînement (11), qui traverse les tourillons (20) du canon (19), les bagues (22) et joints d'étanchéité (23).

9. Tubulure selon la revendication 8, caractérisée en ce que lesdites bagues de guidage (22) présentent des moyens souples venus de moulage sur leur face interne pour limiter le jeu radial de l'arbre d'entraînement (11).

10. Tubulure selon l'une quelconque des revendications 1 à 9, caractérisée en ce que le logement (12) est en partie formé par un évasement (17) dans la paroi (16) dudit conduit (6) d'amenée et fermé par un capot (18) rapporté sur ledit conduit (6) d'amenée et donnant au logement (12) une forme circonscrite à celle du volet (9) en position d'escamotage dans le logement (12).

11. Tubulure selon la revendication 10 telle que rattachée à l'une quelconque des revendications 8 et 9, caractérisée en ce que les bagues de guidage (22) et les tourillons (20) du canon (19) sont logés dans des berceaux (24, 25) ménagés d'une part dans la paroi (16) du conduit (6) correspondant et d'autre part dans le capot (18) de fermeture du logement (12).

12. Tubulure selon l'une quelconque des revendications 1 à 11, pour un moteur à plusieurs chambres de combustion, caractérisée en ce que les volets pivotants (9) d'au moins deux conduits (6) d'amenée sélectivement fermés sont manoeuvrés simultanément par un arbre (11, 31) commun d'entraînement en rotation, commandé par un actionneur (30).

13. Tubulure selon la revendication 12, caractérisée en ce que l'arbre d'entraînement (11) est rigide, de section non de révolution, de préférence constante et carrée.

14. Tubulure selon la revendication 12, caractérisée en ce que l'arbre (31) commun d'entraînement est flexible et comprend une âme (32) sur laquelle sont fixés axialement espacés des segments (33) d'arbre d'entraînement ayant chacun une longueur adaptée à la dimension axiale d'un volet (9) correspondant à entraîner et une section complémentaire, avec un jeu radial adapté, de celle de la lumière (21) du volet (9) que le segment (33) traverse axialement pour assurer son entraînement en rotation.

15. Tubulure selon la revendication 14, caractérisée en ce que l'arbre (31) flexible comprend une âme (32) flexible, en particulier du type constitué de multibrins métalliques torsadés.

16. Tubulure selon l'une des revendications 14 et 15, caractérisée en ce que chaque segment (33) d'arbre d'entraînement est surmoulé sur l'âme (32) de l'arbre (31).

17. Tubulure selon l'une quelconque des revendications 1 à 16, caractérisée en ce qu'elle comprend, en amont, un plenum (2), commun à toutes les chambres de combustion du moteur, et alimenté en air par un orifice d'entrée (3) de la tubulure (1), et, transversalement au plenum (2) et en dérivation vers l'aval à partir de ce dernier, deux conduits d'amenée d'air (5, 6) pour chaque chambre de combustion, lesdits conduits d'amenée étant sensiblement parallèles et côte-à-côte, et tels que l'un (6) est sélectivement fermé par un volet pivotant (9) et l'autre (5) en permanence ouvert, les deux conduits s'étendant jusqu'à une bride (7) de fixation au moteur, dans laquelle chacun des conduits (5, 6) débouche par son orifice de sortie (8) à son extrémité aval.

18. Tubulure selon l'une quelconque des revendications 1 à 17, caractérisée en ce qu'elle est essentiellement réalisée en un matériau de synthèse moulable, de préférence en thermoplastique.

## Patentansprüche

1. Luftstutzen für Verbrennungsmotoren, insbesondere mit wenigstens zwei Einlaßventilen an einer Verbrennungskammer, wobei der Luftstutzen (1) des Typs ist, der für jede Verbrennungskammer wenigstens zwei Luftzufuhrleitungen (5, 6) umfaßt, von denen wenigstens eine von einem gesteuerten Drosselungsorgan, insbesondere für geringe Motorlasten, selektiv und zumindest teilweise geschlossen ist, **dadurch gekennzeichnet, daß** das Drosselungsorgan eine Klappe (9) umfaßt, die um eine im wesentlichen transversal zu der selektiv geschlossenen Leitung (6) angeordneten Achse (10) schwenkbar befestigt ist, und von der einen zu der anderen von zwei Positionen verschwenkt wird, von denen die eine eine zumindest teilweise geschlossene Position der Leitung (6) und die andere eine offene Position der Leitung (6) ist, in welcher die Klappe (9), durch die Betätigung einer Antriebseinrichtung (11) in eine Aufnahme (12) eingeklappt ist, die in der Wand (16) der Leitung (6) angeordnet ist, wobei die Klappe (9) entsprechend als hohler Napf in Richtung auf die Aufnahme (12) ausgerichtet ist und eine Abdeckung (13) zum Verschließen der selektiv geschlossenen Zufuhrleitung (6) umfaßt, deren Form derart beschaffen ist, daß sich in der Position, in welcher die Klappe (9) eingeklappt ist, die Abdeckung (13) zum Verschließen, die den stromaufwärtigen Teil des Napfes bildet, der Form der Wand (16) der Leitung (6) anpaßt und sie auf Höhe der Aufnahme (12) verlängert, indem im wesentlichen ihre Kontinuität sichergestellt ist, um die Aufnahme (12) in dieser Position zu schließen.

2. Luftstutzen nach Anspruch 1, **dadurch gekennzeichnet, daß** der Napf stromabwärts durch einen Abdeckungsboden (14) mit einer gekrümmten Oberfläche geschlossen ist, der die Aufnahme (12) von dem stromabwärtigen Endbereich der Leitung (6) isoliert, wenn sich die Klappe (9) in der geschlossenen Position befindet.

3. Luftstutzen nach Anspruch 2, **dadurch gekennzeichnet, daß** die gekrümmte Oberfläche des Abdeckungsbodens im wesentlichen einen Teil-Zylinder darstellt, der bezüglich der Schwenkachse (10) der Klappe (9) zentriert ist.

4. Luftstutzen nach einem der Ansprüche 2 und 3, **dadurch gekennzeichnet, daß** der Napf zwei laterale Wände umfaßt, die den stromabwärtigen Abdeckungsboden mit der stromaufwärtigen Abdeckung zum Verschließen verbinden und jede einen geringen Abstand zu der lateralen Wand der selektiv geschlossenen Leitung (6) in der er durch die Klappe (9) geschlossenen Position der letzteren aufweist.

5. Luftstutzen nach einem der Ansprüche 1 bis 4, **dadurch gekennzeichnet, daß** die Aufnahme (12) in der Nähe einer Ausgangsöffnung (8) am stromabwärtigen Ende der selektiv geschlossenen Zufuhrleitung (6) angeordnet ist.

6. Luftstutzen nach einem der Ansprüche 1 bis 5, **dadurch gekennzeichnet, daß** die Klappe (9) schwenkbar um ihre Schwenkachse (10) mit ihrem stromaufwärtigen Endbereich (19) befestigt ist, der in der Aufnahme (12) gehalten wird, und zwar entsprechend durch eine Welle (11) entspricht, die den stromaufwärtigen Endbereich (19) durchdringt und um die Schwenkachse (10) der Klappe (9) drehbar ist.

7. Luftstutzen nach einem der Ansprüche 1 bis 6, **dadurch gekennzeichnet, daß** die Klappe (9) schwenkbar um ihre Schwenkachse (10) durch ein Schwenkzapfenrohr (19) angeordnet, das von einem axialen Langloch (21) durchdrungen ist, dessen Querschnitt eine Form aufweist, die an die Querschnittsform (11) einer Antriebswelle angepaßt ist, die dieses mit einem axialen Spiel durchdringt, so daß die Schwenkung der Welle (11) um die Schwenkachse (10) einen Antrieb mit zwangsweiser Schwenkung des Rohres (19) und der Klappe (9) sicherstellt, und daß das axiale Spiel zwischen der Welle (11) und der Klappe (9) der Klappe (9) erlaubt, sich in der Leitung (6) zu zentrieren.

8. Luftstutzen nach Anspruch 7, **dadurch gekennzeichnet, daß** das Rohr (19) der Klappe (9) zwei Schwenkzapfen (20) umfaßt, die koaxial in der Aufnahme (12) gehalten werden, in der die Welle (21) schwenkbar mittels zweier Führungsringe (22) befestigt ist, die axial auf beiden Seiten des Rohres (19) angeordnet sind und jeder wenigstens eine kompressible Dichtung (23) einschließt, was das axiale und/oder radiale Spiel der Klappe (9) bezüglich der Antriebswelle (11) begrenzen kann, die die Schwenkzapfen (20) des Rohres (19), die Ringe (22) und die Dichtungen (23) durchdringt.

9. Luftstutzen nach Anspruch 8, **dadurch gekennzeichnet, daß** die Führungsringe (22) flexible Einrichtungen umfassen, die auf ihrer Innenfläche angeformt sind, um das radiale Spiel der Antriebswelle (11) zu begrenzen.

10. Luftstutzen nach einem der Ansprüche 1 bis 9, **dadurch gekennzeichnet, daß** die Aufnahme (12) teilweise durch eine Ausbauchung (17) in der Wand (16) der Zufuhrleitung (6) ausgebildet und durch eine Abdeckung (18) geschlossen ist, die auf die Zufuhrleitung (6) gesetzt ist und der Aufnahme (12) eine Form gibt, die diejenige der Klappe (9) in der eingeklappten Position in der Aufnahme (12) umgrenzt.

11. Luftstutzen nach Anspruch 10 sowie zusätzlich in Verbindung mit einem der Ansprüche 8 und 9, **dadurch gekennzeichnet, daß** die Führungsringe (22) und die Schwenkzapfen (20) des Rohres (19) in Käfigen (24, 25) angeordnet sind, die einerseits in der Wand (16) der entsprechenden Leitung (6) und andererseits in dem Abdeckungsverschluß (18) der Aufnahme (12) vorgesehen sind.

12. Luftstutzen nach einem der Ansprüche 1 bis 11, für einen Motor mit mehreren Verbrennungskammern, **dadurch gekennzeichnet, daß** die schwenkbaren Klappen (9) von wenigstens zwei selektiv geschlossenen Zufuhrleitungen (6) simultan durch eine gemeinsame Rotationsantriebswelle (11, 13) betätigbar sind, die von einem Betätigungsglied (30) angetrieben ist.

13. Luftstutzen nach Anspruch 12, **dadurch gekennzeichnet, daß** die Antriebswelle (11) starr und mit einem drehfesten, vorzugsweise konstanten und rechteckigen, Querschnitt, ausgebildet ist.

14. Luftstutzen nach Anspruch 12, **dadurch gekennzeichnet, daß** die gemeinsame Antriebswelle (31) flexibel ist und einen Kern (32) aufweist, an dem mit axialem Abstand Segmente (33) der Antriebswelle angeordnet sind, die jede eine an die axiale Dimension einer entsprechenden anzutreibenden Klappe (9) angepaßte Länge und einen Querschnitt aufweist, der mit einem geeigneten radialen Spiel demjenigen des Langlochs (21) der Klappe (9) komplementär ist, das das Segment (33) axial durchdringt, um ihren Rotationsantrieb sicherzustellen.

15. Luftstutzen nach Anspruch 14, **dadurch gekennzeichnet, daß** die flexible Welle (31) einen flexiblen Kern (32) insbesondere des Typs umfaßt, der aus metallischen, tordierten Mehrfachsträngen gebildet ist.

16. Luftstutzen nach einem der Ansprüche 14 und 15, **dadurch gekennzeichnet, daß** jedes Segment (33) der Antriebswelle um den Kern (32) der Welle (31) gegossen ist.

17. Luftstutzen nach einem der Ansprüche 1 bis 16, **dadurch gekennzeichnet, daß** er stromaufwärts einen Sammelraum (2), der in Verbindung mit allen Verbrennungskammern des Motors steht und durch eine Einlaßöffnung (3) des Luftstutzens (1) mit Luft versorgt ist, und transversal zum Sammelraum (2) sowie bei der Umleitung in stromabwärtiger Richtung von diesem letzteren zwei Luftzufuhrleitungen (5, 6) für jede Verbrennungskammer aufweist, wobei die Zufuhrleitungen im wesentlichen parallel und nebeneinander angeordnet sind, und so daß die eine (6) selektiv durch eine schwenkbare Klappe (9) geschlossen ist, und die andere (5) ständig geöffnet ist, wobei sich die beiden Leitungen bis zu einem Motorbefestigungsflansch (7) erstrecken, in den jede der Leitungen (5, 6) durch ihre Auslaßöffnung (8) mit ihrem stromabwärtigen Ende mündet.

18. Luftstutzen nach einem der Ansprüche 1 bis 17, **dadurch gekennzeichnet, daß** er im wesentlichen aus einem synthetischen gießbaren Material, vorzugsweise aus Thermoplast, realisiert ist.

## Claims

1. Intake manifold for internal combustion engines, more particularly with at least two inlet valves per engine combustion chamber, the manifold (1) comprising for each combustion chamber at least two air inlet pipes (5,6) of which at least one (6) is selectively and at least particularly closed, more particularly with weak loads on the engine, through a controlled throttle member, characterised in that the said throttle member comprises a flap, mounted to pivot about an axis (10) substantially transverse to the said selectively closed pipe (6), and pivoted from one to the other of two positions of which one is a position at least partially blocking the said pipe (6) and the other is a position opening the said pipe (6), wherein the flap (9) is retracted, by manoeuvring an entrainment member (11), into a housing (12) formed in the wall (16) of the said pipe (6), the said flap (9) being shaped as a hollow dish towards the housing (12) and comprising a cover (13) closing the said selectively closed inlet pipe (6), and whose shape is such that when the flap (9) is retracted the closing cover (13) which forms the upstream part of the dish follows the shape of the wall (16) of the pipe (6) and extends it to level with the housing (12) thus substantially ensuring continuity in order to close the housing (12) in this position.

2. Manifold according to claim 1 characterised in that the said dish is closed towards downstream by a base cover (14) with curved surface, insulating the housing (12) from the downstream end part of the pipe (6) when the flap (9) is in the blocking position.

3. Manifold according to claim 2 characterised in that the said curved surface of the base flap is substantially a truncated cylinder centred on the pivotal axis (10) of the flap (9).

4. Manifold according to one of claims 2 and 3 characterised in that the dish comprises two lateral walls (15) connecting the base cover (14) downstream to the blocking cover (13) upstream, and each at a slight distance from the lateral wall of the said selectively closed pipe (6), when the flap (9) is in a position blocking the latter.

5. Manifold according to any of claims 1 to 4 characterised in that the said housing (12) is arranged near an outlet orifice (8) at the downstream end of the said selectively closed inlet pipe (6).

6. Manifold according to any of claims 1 to 5 characterised in that the flap (9) is mounted pivoting about its pivotal axis (10) through its upstream end part (19) held in the corresponding housing (12) through a shaft (11) crossing the said upstream end part (19) and rotatable about the pivotal axis (10) of the flap (9).

7. Manifold according to any of claims 1 to 6 characterised in that the flap (9) is mounted pivoting about its pivotal axis (10) through a cylindrical bearing (19), having an axial port (21) whose cross-section has a shape matching that of the section of an entrainment shaft (11) which crosses same with an axial play, so that the rotation of the shaft (11) about the pivotal axis (10) ensures the positive entrainment in rotation of the bearing (19) and of the flap (9) and that the axial play between the shaft (11) and flap allows the flap (9) to be centred in the said pipe (6).

8. Manifold according to claim 7 characterised in that the bearing (19) of the flap (9) comprises two coaxial retaining journals (20) in the housing (12) in which the shaft (21) is mounted pivoting by means of two guide rings (22) set axially on both sides of the bearing (19) and each containing at least one compressible sealing joint (23), capable of restricting the axial and/or radial play of the flap (9) on the entrainment shaft (11) which passes through the journals (20) of the bearing (19), the rings (22) and sealing joints (23).

9. Manifold according to claim 8 characterised in that the said guide rings (22) have flexible means provided by moulding on their internal face in order to restrict the radial play of the entrainment shaft (11).

10. Manifold according to any of claims 1 to 9 characterised in that the housing (12) is in part formed by an enlargement (17) in the wall (16) of the said inlet pipe (6) and closed by a cap (18) fitted on the said inlet pipe (6) and providing the housing (12) with a shape circumscribing that of the flap (9) when the latter is in the retracted position in the housing (12).

11. Manifold according to claim 10 and linked with any of claims 8 and 9 characterised in that the guide rings (22) and the journals (20) of the bearing (19) are housed in cradles (24,25) arranged in one part in the wall (16) of the corresponding pipe (6) and in the other part in the closing cap (18) of the housing (12).

12. Manifold according to any of claims 1 to 11 for an engine with several combustion chambers, characterised in that the pivoting flaps (9) of at least two selectively closed inlet pipes (6) are manoeuvred simultaneously by a common entrainment shaft (11,31) in rotation, controlled by an actuator (30).

13. Manifold according to claim 12 characterised in that the entrainment shaft (11) is rigid, with a non-revolving, preferably constant square section.

14. Manifold according to claim 12 characterised in that the common entrainment shaft (31) is flexible and comprises a core (32) on which are fixed axially spaced segments (33) of the entrainment shaft each having a length adapted to the axial dimension of a corresponding flap (9) which is to be entrained, and a complementary section, with radially adapted play, of that of the port (21) of the flap (9) which the segment (33) passes through axially in order to ensure entrainment in rotation.

15. Manifold according to claim 14 characterised in that the flexible shaft (31) comprises a flexible core (32) more particularly of the type comprising twisted metal multi-strands.

16. Manifold according to any of claims 14 and 15 characterised in that each segment (33) of the entrainment shaft is moulded on the core (32) of the shaft (31).

17. Manifold according to any of claims 1 to 16 characterised in that it comprises upstream a plenum (2), common to all the combustion chambers of the engine, and supplied with air through an inlet orifice (3) of the manifold (1) and, transversely to the plenum (2) and diverted downstream from the latter, two air inlet pipes (5,6) for each combustion chamber, the said inlet pipes being substantially parallel and side-by-side and such that one (6) is selectively closed by a pivoting flap (9) and the other (5) is permanently open, the two pipes extending up to a fixing flange (7) for fixing onto the engine, in which each of the pipes (5,6) opens through its exit orifice (8) at its downstream end.

18. Manifold according to any of claims 1 to 17 characterised in that it is substantially formed from a mouldable synthetic material, preferably thermoplastics.
